# FASCICULE DE BREVET EUROPEEN

(11) **EP 2 461 108 B1**
(45) Date de publication et mention de la délivrance du brevet: **02.03.2016**
(21) Numéro de dépôt: 11191824.9
(22) Date de dépôt: 02.12.2011
(51) Int. Cl.: F24D 3/18, F24D 12/02, F24H 4/02

(54) **Dispositif de chaudière murale, équipement de chauffage d'un fluide, installation de chauffage d'un local et procédé d'adaptation d'un dispositif de chaudière murale**
Wandheizvorrichtung, Ausstattung zum Aufheizen einer Flüssigkeit, Heizanlage eines Lokals und Anpassungsverfahren einer Wandheizvorrichtung
Wall-mounted boiler device, device for heating a fluid, facility for heating a room and method for adapting a wall-mounted boiler device

(30) Priorité: 03.12.2010 FR 1060076
(43) Date de publication de la demande: 06.06.2012
(73) Titulaire: Societe Industrielle de Chauffage (SIC), 59660 Merville (FR)
(72) Inventeur: Lepelletier, Yves, 85170 Le Poire sur Vie (FR); Clement, Jean-Francis, 85000 La Roche sur Yon (FR)
(74) Mandataire: Petit, Maxime

(56) Documents cités:
- EP-A1- 2 133 629
- WO-A2-2009/119695
- FR-A1- 2 501 837
- FR-A1- 2 554 938

## Description

La présente invention concerne un dispositif de chaudière murale, un équipement de chauffage d'un fluide, une installation de chauffage, ainsi qu'un procédé d'adaptation d'un dispositif de chaudière murale.

Les chaudières murales fonctionnant en particulier au gaz de ville sont largement répandues dans les habitations collectives ou individuelles. Ces chaudières permettent notamment de chauffer de l'eau pour chauffer les habitations ou pour un usage sanitaire. De manière classique, ce type de chaudière comprend un boîtier à l'intérieur duquel est ménagé un brûleur au gaz pour chauffer l'eau. Le boîtier est fixé sur un mur de support au moyen d'un dosseret écarteur qui permet de maintenir un jeu entre le mur de support et le boîtier. Ce jeu permet notamment de maintenir un accès aux arrivées d'eau et de gaz, même lorsque la chaudière est fixée au mur.

Cependant, les énergies renouvelables sont de plus en plus préconisées, notamment sous la forme de dispositifs du type pompe à chaleur. Toutefois, le remplacement des chaudières murales au gaz par des dispositifs de pompes à chaleur pose le problème de l'encombrement de la pompe à chaleur par rapport à l'encombrement, plus réduit, de la chaudière murale. En outre, les dispositifs de pompes à chaleur ne présentent pas des performances permettant d'assurer dans les conditions hivernales les plus extrêmes le chauffage de l'eau à la température requise par les installations de chauffage, dites haute température, associées généralement aux chaudières murales.

Il existe donc un besoin pour un dispositif de chaudière murale permettant de chauffer au moins partiellement de l'eau au moyen d'énergie renouvelable et d'encombrement réduit.

Par ailleurs, il est connu de DE-A-32 40 696 un dispositif de chaudière destiné à être posé sur le sol et comportant un réservoir d'eau à chauffer. L'eau peut y être chauffée soit au moyen d'un brûleur soit au moyen d'un dispositif du type pompe à chaleur. Le dispositif du type pompe à chaleur comprend un circuit de fluide frigorigène à travers un évaporateur, un compresseur, un condenseur et un détendeur. Dans l'évaporateur, le fluide frigorigène est évaporé par des calories récupérées d'un flux d'air traversant l'évaporateur. Le compresseur augmente la pression et la température du fluide frigorigène. L'eau dans le réservoir est alors chauffée par les calories que perd le fluide frigorigène dans le condenseur, lequel est plongé dans le réservoir d'eau à chauffer. Enfin, le fluide frigorigène traverse le détendeur avant de recommencer un cycle.

Ce dispositif est cependant très encombrant. En outre, il s'agit d'un dispositif destiné à être posé sur le sol et non une chaudière murale, adaptée à être fixée sur un mur.

Par ailleurs, le document EP-A-2 133 629 décrit un dispositif de chaudière comprenant :
- une chaudière au fuel ou au gaz pour chauffer un fluide à chauffer,
- une pompe à chaleur pouvant fonctionner en mode inversé pour chauffer du fluide à chauffer ;
- la chaudière au fuel étant contenue dans un boîtier, la pompe à chaleur étant disposée à l'extérieur de ce boîtier.

EP-A-2 133 629 décrit également le couplage d'une chaudière au fuel ou au gaz avec une pompe à chaleur.

La présente invention propose un dispositif de chaudière murale comprenant :
- des premiers moyens de chauffage d'un fluide à chauffer,
- des deuxièmes moyens de chauffage du fluide à chauffer, distincts des premiers moyens de chauffage, les deuxièmes moyens de chauffage comportant un condenseur adapté à être relié à un circuit de fluide frigorigène d'une pompe à chaleur,
- un boîtier à l'intérieur duquel sont ménagés les premiers moyens de chauffage du fluide à chauffer, le condenseur étant disposé à l'extérieur du boîtier, et
- un dosseret écarteur adapté à fixer le boîtier sur un support, notamment un mur, en maintenant un jeu entre le boîtier et le support, le condenseur étant adapté à être reçu dans le jeu maintenu par le dosseret écarteur entre le boîtier et le support.

Suivant des modes de réalisation préférés, l'invention comprend une ou plusieurs des caractéristiques suivantes, prises seules ou en combinaison :
- le condenseur est accolé sur une face latérale du boîtier ;
- les premiers moyens de chauffage sont du type à combustible fossile, notamment au gaz ou au fuel, ou du type électrique ;
- le condenseur comporte deux conduits coaxiaux d'échange de calories ;
- le condenseur comporte au moins une portion s'étendant en serpentant ; et
- le condenseur est disposé en amont des premiers moyens de chauffage dans le sens d'écoulement du fluide à chauffer.

Selon un autre aspect, l'invention se rapporte à un équipement de chauffage d'un fluide comportant un dispositif de chaudière murale tel que décrit ci-avant dans toutes ses combinaisons et une pompe à chaleur comprenant un circuit de fluide frigorigène passant par un évaporateur et le condenseur du dispositif de chaudière murale.

De préférence, le circuit de fluide frigorigène passe également à travers un compresseur, en aval de l'évaporateur et en amont du condenseur, et à travers un détendeur, en aval du condenseur et en amont de l'évaporateur.

De manière préférée, la pompe à chaleur est adaptée à récupérer des calories d'un flux d'air, notamment d'un flux d'air à l'extérieur du local à chauffer ou d'un flux d'air extrait du local à chauffer.

L'invention se rapporte également à une installation de chauffage d'un local comprenant un équipement de chauffage d'un fluide tel que décrit ci-avant dans toutes ses combinaison en communication de fluide avec au moins appareil de chauffage à fluide.

L'invention concerne également un procédé d'adaptation d'un dispositif de chaudière murale comprenant des premiers moyens de chauffage d'un fluide à chauffer, le procédé comprenant une étape de raccordement d'un condenseur adapté à être relié à un circuit de fluide frigorigène d'une pompe à chaleur pour chauffer le fluide à chauffer.

Le dispositif de chaudière murale comprend un boîtier à l'intérieur duquel sont ménagés les premiers moyens de chauffage d'un fluide à chauffer, le condenseur étant disposé à l'extérieur du boîtier.

Le boîtier de la chaudière murale est adapté à être fixé sur un support, notamment un mur, avec un jeu entre le boîtier et le support, le condenseur étant disposé dans le jeu entre le boîtier et le support.

Le procédé peut en outre comprendre une étape de raccordement du condenseur à un circuit de fluide frigorigène d'une pompe à chaleur.

De préférence, le condenseur est disposé en amont des premiers moyens de chauffage, dans le sens d'écoulement du fluide à chauffer.

D'autres caractéristiques et avantages de l'invention apparaîtront à la lecture de la description qui suit d'un mode de réalisation préféré de l'invention, donnée à titre d'exemple et en référence au dessin annexé.

La figure 1 représente schématiquement un détail d'une première installation de chauffage d'un fluide.

Les figures 2 et 3 représentent schématiquement un détail du montage d'un dispositif de chaudière murale utilisé dans la première installation de chauffage d'un fluide vu de derrière et vu de côté, respectivement.

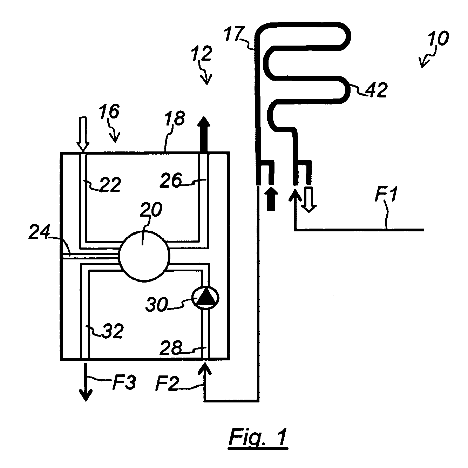

Telle qu'illustrée à la figure 1, une installation de chauffage d'un fluide 10 comprend principalement un équipement de chauffage d'un fluide 12 en communication de fluide avec des appareils de chauffage à fluide qui sont répartis dans le local à chauffer.

Ici, le fluide à chauffer est de l'eau.

Selon une variante non représentée, l'installation de chauffage peut également comporter un réservoir de fluide à chauffer, ou ballon de stockage, en communication de fluide avec l'équipement de chauffage 12. Il est à noter que le ballon de stockage peut être disposé à distance de l'équipement de chauffage. Dans une telle installation, l'équipement de chauffage peut notamment permettre la production d'eau chaude sanitaire.

L'équipement de chauffage 12 comporte un dispositif de chaudière murale 16 et une pompe à chaleur, dont seul un condenseur 17 est représenté. En l'espèce, la pompe à chaleur est du type pompe à chaleur air/eau bi-bloc.

De préférence, le dispositif de chaudière murale 16 est dépourvu de réservoir de stockage de fluide à chauffer. Ceci permet notamment de limiter l'encombrement du dispositif de chaudière murale 16. Il est en outre possible de prévoir un réservoir de fluide à chauffer déporté à l'extérieur du dispositif de chaudière murale.

Le dispositif de chaudière murale 16 comprend un boîtier 18 à l'intérieur duquel sont ménagés des premiers moyens de chauffage d'un fluide à chauffer 20.

Les premiers moyens de chauffage d'un fluide à chauffer 20 sont de préférence du type à combustible fossile, notamment au gaz ou au fuel, ou du type électrique. Ces différents types de moyens de chauffage sont les plus répandus.

En l'espèce, les premiers moyens de chauffage d'un fluide à chauffer 20 sont un brûleur au gaz.

Le dispositif de chaudière murale 16 comporte un premier conduit 22 d'alimentation en air du brûleur 20 et un second conduit 24 d'alimentation en gaz du brûleur 20. Les gaz de combustion sont évacués par un conduit d'évacuation 26.

Le dispositif de chaudière murale 16 comporte encore un conduit d'arrivée d'eau 28. Une pompe 30 est ménagée sur le conduit d'arrivée d'eau 28, lequel conduit d'arrivée d'eau 28 est en communication de fluide avec une source d'eau à chauffer (illustrée par la flèche F1) comme par exemple la sortie du circuit d'alimentation en eau des appareils de chauffage à fluide (en aval des appareils de chauffage) et/ou d'un réservoir de fluide à chauffer éventuel, pour mettre en mouvement l'eau dans le conduit et pour l'amener ainsi jusqu'au brûleur 20, afin que celui-ci chauffe l'eau, par combustion du gaz et de l'air. L'eau, chauffée, est ensuite évacuée par le conduit d'évacuation d'eau 32 vers le circuit d'eau chaude alimentant les appareils de chauffage à fluide (illustré par la flèche F3).

En variante, l'eau chauffée peut être évacuée vers un réservoir de fluide à chauffer ou ballon de stockage. Le réservoir de fluide à chauffer peut alors :
- fournir de l'eau chaude à des appareils de chauffage à fluide et/ou
- fournir de l'eau chaude sanitaire pour le logement dans lequel il est installé.

De manière remarquable, entre les appareils de chauffage à fluide et le conduit d'entrée 28, il est prévu un deuxième moyen de chauffage de l'eau, au moyen d'une pompe à chaleur.

Le deuxième moyen de chauffage de l'eau comporte notamment un condenseur 17 où l'eau à chauffer échange des calories avec un fluide frigorigène. Le condenseur 17 fait également partie d'un circuit de fluide frigorigène de la pompe à chaleur (non représenté). Ce circuit de fluide frigorigène de la pompe à chaleur comporte un évaporateur où le fluide frigorigène récupère des calories d'une source de chaleur, par exemple un flux d'air extérieur ou un flux d'air extrait de l'appartement. Ce circuit de fluide frigorigène peut également comporter un compresseur qui permet à la fois de mettre en circulation le fluide frigorigène et d'en augmenter la température en le comprimant. Enfin, en aval du condenseur, le circuit de fluide frigorigène peut comporter un détendeur.

Il est à noter que la totalité du circuit du fluide frigorigène est déporté à l'extérieur du dispositif de chaudière murale. Ceci permet de déporter le dispositif de pompe à chaleur dans un autre local que celui dans lequel se trouve le dispositif de chaudière murale, lequel est généralement de taille limitée.

Il est encore à noter que le condenseur 17 est situé en amont, dans le sens d'écoulement de l'eau à chauffer, des premiers moyens de chauffage. Ainsi, la pompe à chaleur permet un préchauffage de l'eau et, si ce préchauffage ne permet pas d'atteindre la température souhaitée de l'eau, il est possible de réaliser un chauffage complémentaire de l'eau au moyen des premiers moyens de chauffage. Dans ce cas, la quantité de chaleur à fournir par les premiers moyens de chauffage est réduite par rapport au cas où ces premiers moyens de chauffage doivent assurer la totalité du chauffage de l'eau. La consommation en gaz est ainsi réduite.

Le condenseur 17 est du type coaxiale, c'est-à-dire qu'il est constitué de deux conduits coaxiaux, l'un parcouru par l'eau à chauffer et l'autre par le fluide frigorigène. De préférence, le fluide frigorigène circule dans le conduit externe et l'eau à chauffer dans le conduit interne, ceci afin d'optimisé le chauffage de l'eau.

Les deux conduits coaxiaux sont de préférence corrugués, pour accroître la surface d'échange de chaleur entre l'eau à chauffer et le fluide frigorigène.

De préférence, l'eau à chauffer et le fluide frigorigène s'écoulent dans des directions opposées, dans le condenseur 17, pour améliorer les échanges thermiques entre le fluide frigorigène et l'eau à chauffer. Ainsi, en l'espèce, l'eau à chauffer pénètre dans le condenseur 17 par la même extrémité que celle par laquelle le fluide frigorigène sort du condenseur. Par conséquent, le fluide frigorigène, chaud, pénètre dans le condenseur 17 par la même extrémité que celle par laquelle l'eau chauffée sort, laquelle extrémité est en communication de fluide avec le conduit d'arrivée d'eau 28 du dispositif de chaudière murale 16 (la communication de fluide est illustrée par la flèche F2).

Pour améliorer encore les échanges thermiques entre le fluide frigorigène et l'eau à chauffer, la longueur du condenseur est maximisée par rapport à son encombrement. Ainsi, le condenseur 17 comporte au moins une portion 42 s'étendant, dans un plan, en serpentant. En l'espèce, la portion 42 du condenseur 40 qui serpente s'étend en boustrophédon ou, en d'autres termes, en formant des « S » successifs.

De manière remarquable, le condenseur 17 est ici disposé à l'extérieur du boîtier 18 du dispositif de chaudière murale 16. Ceci permet notamment d'adapter ce condenseur 17 à un dispositif de chaudière murale préexistant. Pour limiter l'encombrement du dispositif de chaudière murale 16 incluant le condenseur 17, celui-ci est de préférence accolé au boîtier 18, notamment sur un côté (ou face latérale) du boîtier 18.

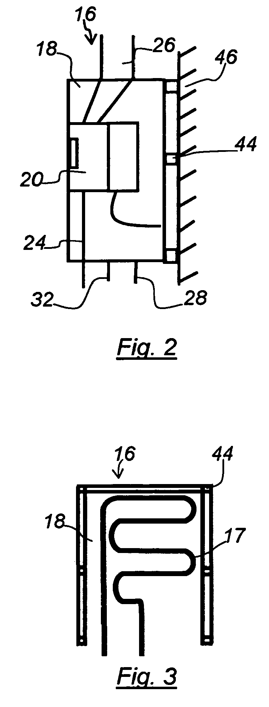

Cependant, selon un mode de réalisation particulièrement avantageux représenté aux figures 2 et 3, le dispositif de chaudière murale 16 comporte un dosseret écarteur 44 adapté à maintenir le boîtier 18 du dispositif de chaudière murale 16 à distance du support 46 sur lequel il est fixé. En l'espèce le support 46 est un mur de l'appartement.

Le dosseret écarteur 44 est un ensemble mécano-soudé rigide destiné à supporter l'ensemble des composants du dispositif de chaudière murale et à l'éloigner des liaisons hydrauliques ou combustible passant par le mur sur lequel le dispositif de chaudière murale est fixé.

Dans ce cas, où un dosseret écarteur 44 est prévu, le condenseur 17 est avantageusement disposé dans le jeu maintenu par le dosseret écarteur 44 entre le support 46 et le boîtier 18. De préférence, le condenseur 17 ne fait pas saillie de l'espace entre le support 46 et le boîtier 18, c'est-à-dire que le condenseur 17 n'est pas visible lorsque l'on regarde le dispositif de chaudière murale de face. L'encombrement total du dispositif de chaudière murale est ainsi limité. En particulier, cet encombrement est le même que celui d'un dispositif de chaudière murale classique n'incorporant que le brûleur au gaz pour chauffer l'eau.

Ainsi, il est proposé une solution permettant, dans l'encombrement d'un dispositif de chaudière murale fonctionnant au gaz de ville, par exemple, de pouvoir également recourir à l'utilisation d'une pompe à chaleur. Le dispositif de chaudière murale décrit associe donc recours aux énergies renouvelables, performance et adaptabilité aux conditions fixées par la rénovation.

Selon un autre aspect, il est proposé un procédé d'adaptation d'un dispositif de chaudière murale 16 comprenant un boîtier 18 et des premiers moyens de chauffage 20 d'un fluide à chauffer. Ce procédé comprend une étape de raccordement d'un condenseur 17, adapté à être relié à un circuit de fluide frigorigène d'une pompe à chaleur pour chauffer le fluide à chauffer. Le condenseur peut être disposé à l'extérieur du boîtier 18 pour faciliter l'incorporation de ce condenseur. De préférence, le condenseur est disposé en amont des premiers moyens de chauffage, par rapport au sens d'écoulement du fluide à chauffer. Aucun réservoir de fluide à chauffer n'est prévu dans le boîtier 18 ce qui permet notamment de limiter l'encombrement du dispositif de chaudière murale.

De préférence, le boîtier 18 du dispositif de chaudière 16 murale est adapté à être fixé sur un mur de support avec un jeu entre le boîtier et le mur de support, le condenseur étant disposé dans le jeu entre le boîtier et le mur de support. Le jeu entre le boîtier et le mur de support peut par exemple être obtenu en fixant le boîtier sur le mur à l'aide d'un dosseret écarteur, comme cela est décrit ci-avant.

Selon un mode de réalisation, le procédé comprend une étape de raccordement du condenseur à un circuit de fluide frigorigène d'une pompe à chaleur.

Bien entendu, la présente invention n'est pas limitée aux exemples et aux modes de réalisation décrits et représentés, mais elle est susceptible de nombreuses variantes accessibles à l'homme de l'art.

Ainsi, dans la description, le fluide à chauffer est de l'eau. Il peut cependant s'agir de tout fluide caloporteur, notamment d'un fluide caloporteur adapté à une installation de chauffage.

## Revendications

1. Dispositif de chaudière murale (16) comprenant :
- des premiers moyens de chauffage d'un fluide à chauffer (20),
- des deuxièmes moyens de chauffage du fluide à chauffer, distincts des premiers moyens de chauffage (20), les deuxièmes moyens de chauffage comportant un condenseur (17) adapté à être relié à un circuit de fluide frigorigène d'une pompe à chaleur ;
- un boîtier (18) à l'intérieur duquel sont ménagés les premiers moyens de chauffage du fluide à chauffer, le condenseur (17) étant disposé à l'extérieur du boîtier (18) ;
**caractérisé en ce que** le dispositif comprend en outre :
- un dosseret écarteur (44) adapté à fixer le boîtier (18) sur un support, notamment un mur (46), en maintenant un jeu entre le boîtier (18) et le support, le condenseur (17) étant adapté à être reçu dans le jeu maintenu par le dosseret écarteur (44) entre le boîtier (16) et le support.

2. Dispositif de chaudière murale selon la revendication 1, dans lequel les premiers moyens de chauffage (20) sont du type à combustible fossile, notamment au gaz ou au fuel, ou du type électrique.

3. Dispositif de chaudière murale selon la revendication 1 ou 2, dans lequel le condenseur (17) comporte deux conduits coaxiaux d'échange de calories.

4. Dispositif de chaudière murale selon la revendication 3, dans lequel le condenseur (17) comporte au moins une portion (42) s'étendant en serpentant.

5. Dispositif de chaudière murale selon l'une quelconque des revendications précédentes, dans lequel le condenseur (17) est disposé en amont des premiers moyens de chauffage (20) dans le sens d'écoulement du fluide à chauffer.

6. Équipement de chauffage (12) d'un fluide comportant :
- un dispositif de chaudière murale (16) selon l'une quelconque des revendications précédentes ;
- une pompe à chaleur comprenant un circuit de fluide frigorigène passant par un évaporateur et le condenseur (17) du dispositif de chaudière murale (16).

7. Équipement de chauffage d'un fluide selon la revendication 6, dans lequel le circuit de fluide frigorigène passe également à travers un compresseur, en aval de l'évaporateur et en amont du condenseur (17), et à travers un détendeur, en aval du condenseur (17) et en amont de l'évaporateur.

8. Équipement de chauffage d'un fluide selon la revendication 6 ou 7, dans lequel la pompe à chaleur est adaptée à récupérer des calories d'un flux d'air, notamment d'un flux d'air à l'extérieur du local à chauffer ou d'un flux d'air extrait du local à chauffer.

9. Installation (10) de chauffage d'un local comprenant un équipement de chauffage d'un fluide selon l'une des revendications 6 à 8 en communication de fluide avec au moins appareil de chauffage à fluide.

10. Procédé d'adaptation d'un dispositif de chaudière murale (16) comprenant des premiers moyens de chauffage d'un fluide à chauffer (20), le procédé comprenant une étape de raccordement d'un condenseur (17) adapté à être relié à un circuit de fluide frigorigène d'une pompe à chaleur pour chauffer le fluide à chauffer, le dispositif de chaudière murale comprenant un boîtier (18) à l'intérieur duquel sont ménagés les premiers moyens de chauffage d'un fluide à chauffer (20), le condenseur (17) étant disposé à l'extérieur du boîtier (18), **caractérisé en ce que** le boîtier (18) de la chaudière murale (16) est adapté à être fixé sur un support, notamment un mur (46), avec un jeu entre le boîtier (18) et le support (46), le condenseur (17) étant disposé dans le jeu entre le boîtier (18) et le support.

11. Procédé selon la revendication 10, comprenant en outre une étape de raccordement du condenseur (17) à un circuit de fluide frigorigène d'une pompe à chaleur.

12. Procédé selon la revendication 10 ou 11, dans lequel le condenseur (17) est disposé en amont des premiers moyens de chauffage (20), dans le sens d'écoulement du fluide à chauffer.

## Patentansprüche

1. Wandheizvorrichtung (16), umfassend:
- erste Heizmittel eines zu heizenden Fluids (20),
- zweite Heizmittel des zu heizenden Fluids, die sich von den ersten Heizmitteln (20) unterscheiden, wobei die zweiten Heizmittel einen Kondensator (17) aufweisen, der ausgebildet ist, um mit einem Kühlfluid einer Wärmepumpe verbunden zu sein,
- einen Behälter (18), in dem die ersten Heizmittel des zu heizenden Fluids ausgebildet sind, wobei der Kondensator (17) außerhalb des Behälters (18) angeordnet ist,
**dadurch gekennzeichnet, dass** die Vorrichtung ferner umfasst:
- einen Abstandshalter (44), der ausgebildet ist, um den Behälter (18) auf einer Unterlage, vor allem einer Mauer (46), zu befestigen, bei Beibehaltung eines Spiels zwischen dem Behälter (18) und der Unterlage, wobei der Kondensator (17) ausgebildet ist, um in dem Spiel aufgenommen zu sein, das von dem Abstandshalter (44) zwischen dem Behälter (16) und der Unterlage aufrechterhalten wird.

2. Wandheizvorrichtung nach Anspruch 1, wobei die ersten Heizmittel (20) vom Typ fossiler Brennstoff sind, insbesondere aus Gas oder Öl, oder vom elektrischen Typ.

3. Wandheizvorrichtung nach Anspruch 1 oder 2, wobei der Kondensator (17) zwei koaxiale Wärmetauschleitungen aufweist.

4. Wandheizvorrichtung nach Anspruch 3, wobei der Kondensator (17) mindestens einen Abschnitt (42) aufweist, der sich schlängelnd erstreckt.

5. Wandheizvorrichtung nach einem der vorangehenden Ansprüche, wobei der Kondensator (17) in Fließrichtung des zu heizenden Fluids vor den ersten Heizmitteln (20) angeordnet ist.

6. Heizausrüstung (12) eines Fluids, aufweisend:
- eine Wandheizvorrichtung (16) nach einem der vorangehenden Ansprüche,
- eine Wärmepumpe, die einen Kühlfluidkreis umfasst, der durch einen Verdampfer und den Kondensator (17) der Wandheizvorrichtung (16) führt.

7. Heizausrüstung eines Fluids nach Anspruch 6, wobei der Kühlfluidkreis ebenfalls durch einen Kompressor nach dem Verdampfer und vor dem Kondensator (17) und durch einen Druckminderer nach dem Kondensator (17) und vor dem Verdampfer führt.

8. Heizausrüstung eines Fluids nach Anspruch 6 oder 7, wobei die Wärmepumpe ausgebildet ist, um Wärme aus einem Luftstrom zu gewinnen, insbesondere aus einem Luftstrom außerhalb des zu heizenden Raums oder aus einem aus dem zu heizenden Raum entnommenen Luftstrom.

9. Heizvorrichtung (10) eines Raums, umfassend eine Heizausrüstung eines Fluids nach einem der Ansprüche 6 bis 8 in Fluidkommunikation mit mindestens Fluidheizgerät.

10. Anpassungsverfahren einer Wandheizvorrichtung (16), die erste Heizmittel eines zu heizenden Fluids (20) umfasst, wobei das Verfahren einen Verbindungsschritt eines Kondensators (17) umfasst, der ausgebildet ist, um mit einem Kühlfluidkreis einer Wärmepumpe verbunden zu sein, um das zu heizenden Fluid zu heizen, wobei die Wandheizvorrichtung (16) einen Behälter (18) umfasst, in dem die ersten Heizmittel eines zu heizenden Fluids (20) ausgebildet sind, wobei der Kondensator (17) außerhalb des Behälters (18) angeordnet ist, **dadurch gekennzeichnet, dass** der Behälter (18) der Wandheizung (16) ausgebildet ist, um auf einer Unterlage, vor allem einer Mauer (46), mit einem Spiel zwischen dem Behälter (18) und der Unterlage (46) befestigt zu sein, wobei der Kondensator (17) in dem Spiel zwischen dem Behälter (18) und der Unterlage angeordnet ist.

11. Verfahren nach Anspruch 10, das ferner einen Verbindungsschritt des Kondensators (17)mit einem Kühlfluidkreis einer Wärmepumpe umfasst.

12. Verfahren nach Anspruch 10 oder 11, wobei der Kondensator (17) in Fließrichtung des zu heizenden Fluids vor den ersten Heizmitteln (20) angeordnet ist.

## Claims

1. A wall-mounted boiler device (16), comprising:
- first means for heating a fluid to be heated (20),
- second means for heating the fluid to be heated, separate from the first heating means (20), the second heating means including a condenser (17) suitable for being connected to a refrigerant circuit of a heat pump;
- a housing (18) inside which the first means for heating the fluid to be heated are arranged, the condenser (17) being positioned outside the housing (18);
**characterized in that** the device further comprises:
- a spacer backsplash (44) suitable for fixing the housing (18) on a support, in particular a wall (46), while maintaining play between the housing (18) and the support, the condenser (17) being able to be received in the play maintained by the spacer backsplash (44) between the housing (16) and the support.

2. The wall-mounted boiler device according to claim 1, wherein the first heating means (20) are of the fossil fuel type, in particular gas or fuel oil, or of the electric type.

3. The wall-mounted boiler device according claim 1 or 2, wherein the condenser (17) includes two coaxial heat exchange pipes.

4. The wall-mounted boiler device according to claim 3, wherein the condenser (17) includes at least one coil extending portion (42).

5. The wall-mounted boiler device according to any one of the preceding claims, wherein the condenser (17) is positioned upstream from the first heating means (20) in relation to the flow direction of the fluid to be heated.

6. Equipment (12) for heating a fluid, including:
- a wall-mounted boiler device (16) according to any one of the preceding claims;
- a heat pump comprising a refrigerant circuit passing through an evaporator and the condenser (17) of the wall-mounted boiler device (16).

7. The equipment for heating the fluid according to claim 6, wherein the refrigerant circuit also passes through a compressor, downstream from the evaporator and upstream from the condenser (17), and through an expander, downstream from the condenser (17) and upstream from the evaporator.

8. The equipment for heating the fluid according to claim 6 or 7, wherein the heat pump is suitable for recovering calories from an air flow, in particular an air flow from the outside of the premises to be heated or an air flow extracted from the inside of the premises to be heated.

9. An installation (10) for heating premises comprising equipment for heating a fluid according to one of claims 6 to 8 in fluid communication with at least one fluid heating apparatus.

10. A method for adapting a wall-mounted boiler device (16) comprising first means for heating the fluid to be heated (20), the method comprising a step for connecting a condenser (17) able to be connected to a refrigerant circuit of a heat pump in order to heat the fluid to be heated, the wall-mounted boiler device comprising a housing (18) inside which the first means are arranged for heating the fluid to be heated (20), the condenser (17) being positioned outside the housing (18), **characterized in that** the housing (18) of the wall-mounted boiler (16) is suitable for being fixed on a support, in particular a wall (46), with play between the housing (18) and the support (46), the condenser (17) being positioned in the play between the housing (18) and the support.

11. The method according to claim 10, further comprising a step for connecting the condenser (17) to a refrigerant circuit of a heat pump.

12. The method according to claim 10 or 11, wherein the condenser (17) is positioned upstream from the first heating means (20), in the flow direction of the fluid to be heated.
